# EUROPEAN PATENT APPLICATION

(11) **EP 2 987 437 A1**
(43) Date of publication of application: **24.02.2016**
(21) Application number: 15181250.0
(22) Date of filing: 17.08.2015
(51) Int. Cl.: A47J 31/44

(54) **MACHINE FOR THE PREPARATION OF AN INFUSED DRINK**

(30) Priority: 22.08.2014 IT BS20140155
(71) Applicant: Capitani S.r.l., 22070 Solbiate (CO) (IT)
(72) Inventor: CAPITANI, Gionata, 22070 Solbiate, Como (IT)
(74) Representative: Chimini, Francesco

(57) **Abstract**

This invention relates to a machine (1) for making an infused drink, such as tea or coffee. The machine (1) comprises functional devices suitable to cooperate with each other to make the infused drink, a machine frame (20) that defines a plurality of seats for the support of said functional devices, and an outer casing (50) suitable for covering said machine frame and the functional devices mounted on said machine frame. Since all the functional devices are mounted on the machine frame, the outer casing has only an aesthetic and protective function.

## Description

This invention relates to a machine for making an infused drink, preferably a tea or coffee-flavoured drink.

The use of machines is known for making infused drinks of various flavours, for example coffee, tea or aromatic infusions.

Recently, a particular type of the aforesaid machines, using disposable capsules or pods, is experiencing increasing popularity; these capsules or pods contain a single predefined portion of the substance to be subjected to infusion, such as tea or coffee, for which the above-mentioned machines are suitable to combine great simplicity/versatility of use with excellent sensory properties of the drink.

However, the known machines have the drawback of being constructed in a complex manner, with evident disadvantages in terms of assembly times and costs and maintenance.

This invention falls within the above context, proposing to provide a machine suitable to be produced in a more economical way than the machines of the known art, and that is advantageously suited to significantly speed-up repairs or periodic maintenance.

Another object of the invention is to propose a machine having a particularly compact and linear structure that, among other things, allows modifying its aesthetic appearance during production in a particularly simple and economical way.

Such objects are achieved by means of a machine according to claim 1. The dependent claims describe advantageous or preferred embodiments.

The machine according to the invention will now be described in detail, with the help of the accompanying drawings, in which:

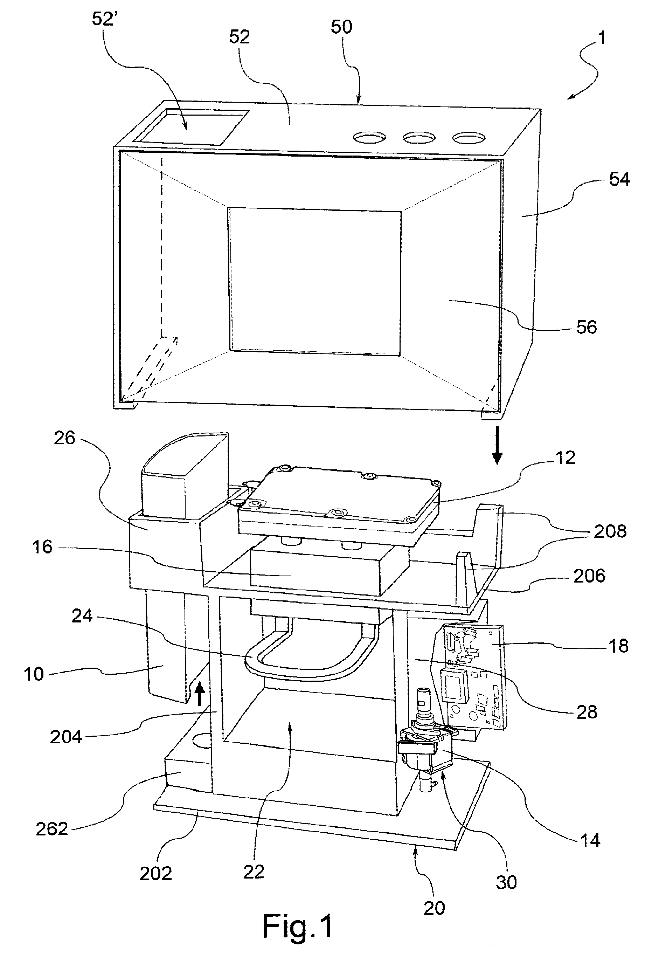

- Figure 1 is a schematic perspective view of the machine for making an infused drink according to the invention, with the outer casing separated; and
- Figure 2 is another perspective view of the machine without outer casing.

With reference to the above figures, reference number 1 identifies, in its entirety, a machine for making an infused drink, preferably tea or coffee.

The machine 1 comprises functional devices suitable to cooperate with each other to make the infused drink. In particular, said functional devices comprise at least one tank 10 for an infusion liquid, for example water, a heat exchanger 12 suitable to heat said infusion liquid, a circulation pump 14 suitable to draw a predetermined amount of the infusion liquid from the tank 10 and to supply it to the heat exchanger 12, an infusion group 16 operatively connected to the heat exchanger 12 and suitable to receive an aromatic substance in a capsule or pod, and an electronic control unit 18 suitable to control the operation of the machine.

These functional devices are supported by a machine frame 20 that defines a plurality of seats suitable to house and lock said devices.

The machine 1 is completed by an outer casing 50 suitable to cover said machine frame 20 and the functional devices mounted on said frame. Since all the functional devices are supported by and connected to the machine frame 20, the outer casing 50 has only an aesthetic and protective function.

In other words, the outer casing 50 is without, or in any case does not support, any of the major components used for the operation of the above-mentioned machine.

In addition the machine frame 20 with the functional devices mounted on it is configured and arranged so as to be covered by an outer casing 50 of a parallelepiped shape. For example, the outer casing 50 is shaped like a rectangular parallelepiped and therefore comprises a horizontal upper wall 52, a pair of parallel side walls 54, a front wall 56 and a rear wall.

In a preferred embodiment, the machine frame 20 is made in one piece, for example in polymeric material and by moulding.

In one embodiment, all the functional devices mentioned above are supported by the machine frame 20 in a releasable manner, so as to be easily removed and reconnected.

The machine frame 20 delimits a cup compartment 22 accessible for the dispensing and collection of the drink. In a preferred embodiment, the cup compartment 22 passes completely through the machine, from its front side to its rear side. In this case, therefore, the front and rear walls 56 of the outer casing 50 are configured as a frame.

In a preferred embodiment, the machine frame 20 comprises a base 202, a central body 204, which extends from said base, and an upper cross member 206. The cup compartment 22 is made in the central body 204.

The central body 204 is then traversed by an opening that extends from the front side to the rear side of the machine.

In one embodiment, the infusion group 16 is mounted on the upper horizontal cross member 206, above the cup compartment 22. A lower portion (not shown) of the infusion group 16 pass through the upper cross member 206 and protrudes into the cup compartment 22 to receive a pod or capsule inserted through said compartment. Note that, in the embodiment illustrated, there is also a lever 24 connected to the lower portion of the infusion group 16 and protruding frontally from the cup compartment 22.

In a preferred embodiment, the heat exchanger 12 is located directly above the infusion group 206.

The base 202 and the upper cross member 206 extend laterally beyond the width of the central body 204 so as to define, on at least one side, a tank seat 26 for the tank 10 of infusion liquid and, at least on the opposite side, a control unit seat 28 for housing the electronic control unit and a pump seat 30 for fixing the circulation pump 14.

In a further embodiment, the tank seat 20 is made on both sides of the machine frame 20.

In particular, the tank seat 26 is formed by an upper pocket 261 formed at least in a lateral end of the upper cross member 206 and by a bottom 262 placed on at least one corresponding end of the base 22 and suitable to receive the lower end of the tank 10.

In a preferred embodiment, the tank 10 is removable and can be slipped from above into the upper pocket 261 until its engagement with the bottom 262. To this purpose, the upper wall 52 of the outer casing 50 is provided with a window 52' for the insertion and extraction of the tank 10. For example, the tank 10 has a lid - not shown - also having the function of handle for easily removing the tank 10 from its seat 26.

In one embodiment, the control unit seat 28 is formed from a pocket, always made in one piece with the machine frame 20, that extends between the base 202 and the upper cross member 206.

Advantageously, the tank 10 for the infusion liquid and the circulation pump 14 are fluidically connected by connecting means which suck the infusion liquid from the bottom of the tank 10, for example through the bottom 262, and that slide along the base 202 on the side of the main body 204.

In one embodiment, from the ends of the upper cross member 206 small columns 208 extend that support the upper wall 52 of the outer casing 50.

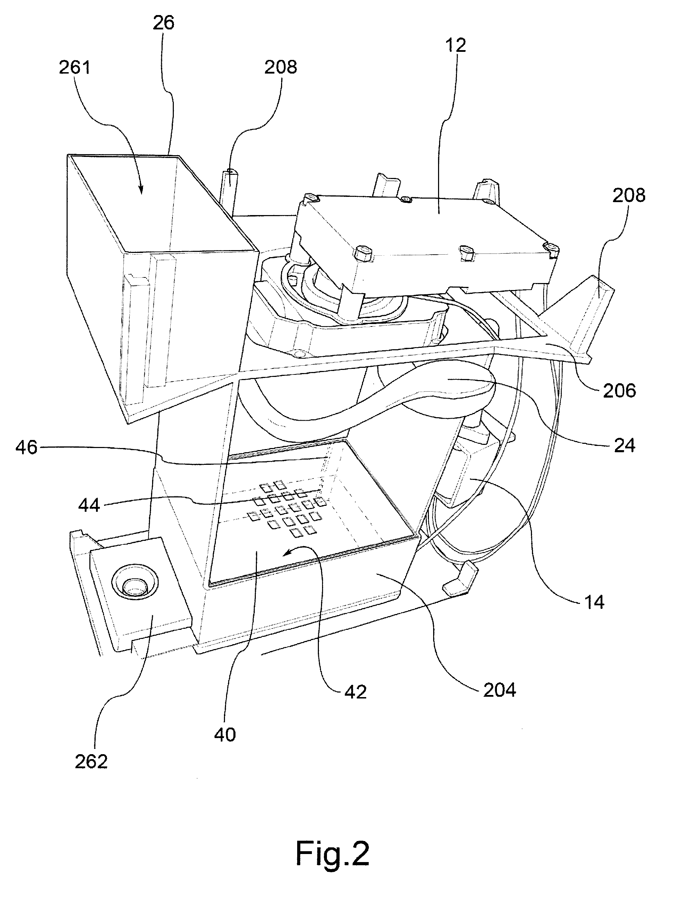

With reference to Figure 2, the central body 204 of the machine frame 20 houses at the bottom a cup-raiser drawer 40 positionable at two different heights from the base 202.

For example, the cup-raiser drawer 40 is housed in a drawer compartment 42 of the central body 204. On two opposite walls of said drawer compartment 42 are formed vertical ribs 44 that extend from the bottom of said drawer compartment 42 up to an intermediate height of said opposite walls and that act as spacers on which rests the cup-raiser drawer 40 when said drawer is inserted into the drawer compartment in a first orientation, to which corresponds the maximum height of the cup-raiser drawer 40. In the corresponding side walls of the cup-raiser drawer 40 are partially formed vertical grooves 46 suitable to receive said vertical ribs 44 when the drawer is inserted into the drawer compartment in a second orientation rotated 180° to the first. In such a case, cup-raiser drawer 30 can be inserted fully into the drawer compartment 42 so that the supporting plane of the cup or container is at the minimum height.

The positioning of the tank 10 for the infusion liquid on the side of the machine frame 20, and of the heat exchanger 12, directly on the infusion group 16 allows providing a machine with a very reduced depth and open in the central part. The short (or narrow) machine can be housed in cramped spaces, such as those of domestic kitchens.

The central pass-through opening allows positioning on the support surface formed by the cup-raiser drawer, in addition to the traditional cups for tea and/or coffee, also teapots of larger dimensions.

The possibility of mounting all of the functional devices only on the machine frame provides an ease and speed of assembly and repair of the machine. The outer casing, being without functional components, is simple to produce and, combined with its parallelepiped shape, can also be made of wood and/or steel, since particular shapes are not required.

Moreover, thanks to the structural simplicity of the outer casing 50, the aesthetic appearance of the machine can be changed at will by simply changing the outer casing, without having to redesign the entire machine and therefore with considerable savings in terms of time and production costs.

The heat exchanger placed directly on the infusion group, in addition to optimising the overall dimensions, also allows directly heating the infusion group, and thus improving the infusion of tea and/or coffee capsules, which require very stable temperatures.

To the embodiments of the machine described above, one skilled in the art, in order to meet specific needs, may make variants or substitutions of elements with others functionally equivalent.

Even these variants are contained within the scope of protection, as defined by the following claims.

Moreover, each of the variants described as belonging to a possible embodiment can be realised independently of the other variants described.

## Claims

1. Machine (1) for making an infused drink, such as tea or coffee, comprising:
- functional devices suitable to cooperate to produce the infused drink, said functional devices comprising at least one tank (10) for an infusion liquid, a heat exchanger (12) suitable to heat said infusion liquid, a circulation pump (14) suitable to draw a predetermined amount of the infusion liquid from the tank and to supply it to the heat exchanger, an infusion group (16) operatively connected to the heat exchanger and suitable to receive an aromatic substance in a capsule or pod, and an electronic control unit (18) suitable to control the operation of the machine;
- a machine frame (20) which defines a plurality of seats for the support of said functional devices; and
- an outer casing (50) suitable to cover said frame of the machine and the functional devices mounted on said machine frame, said outer casing having an exclusively aesthetic and protective function.

2. Machine according to claim 1, wherein the machine frame (20) with the functional devices mounted on it is configured and arranged so as to be covered by an outer casing (50) of a parallelepiped shape.

3. Machine according to claim 1 or 2, wherein the machine frame is made in one piece, for example in polymeric material and by moulding.

4. Machine according to any of the previous claims, wherein all the functional devices are supported by the machine frame in a releasable manner.

5. Machine according to any of the previous claims, wherein the machine frame (20) delimits a cup compartment (22) accessible for the dispensing and collection of the drink, and wherein said cup compartment (22) crosses the machine completely, from the front side to the rear side thereof.

6. Machine according to any of the previous claims, wherein the machine frame (20) comprises a base (202), a central body (204) which extends from said base, and an upper cross member (206).

7. Machine according to claims 5 and 6, wherein the cup compartment (22) is made in the central body (204).

8. Machine according to claim 6 or 7, wherein the infusion group (16) is mounted on said upper cross member (206), and wherein the heat exchanger (12) is placed directly above the infusion group.

9. Machine according to any of the claims 6-8, wherein the base and the upper cross member extend laterally beyond the width of the central body so as to define, on at least one side, a tank seat (26) for the tank of infusion liquid and, at least on the opposite side, a control unit seat (28) for housing the electronic control unit and a pump seat (30) for fixing the circulation pump.

10. Machine according to claim 9, wherein the tank seat (261) is made on both sides of the machine frame.

11. Machine according to any of the claims 6-10, wherein the central body of the machine frame houses at the bottom a cup-raiser drawer (40) positioned at two different heights from the base (202).

12. Machine according to the previous claim, wherein the cup-raiser drawer (40) is housed in a drawer compartment (42) of the central body, vertical ribs (44) being made on two opposite walls of said drawer compartment which extend from the bottom of said drawer compartment to an intermediate height of said opposite walls and which act as spacers on which to rest the cup-raiser drawer (40) when said drawer is inserted in the drawer compartment in a first orientation, vertical grooves (46) being partially made in the corresponding side walls of the cup-raiser drawer suitable to receive said vertical ribs (44) when the drawer is inserted in the drawer compartment in a second orientation rotated by 180° compared to the first.

13. Machine according to any of the claims 6-12, wherein small columns (208) extend from the ends of the upper cross member to support the upper part of the outer casing (50).
